# FASCICULE DE BREVET EUROPEEN

(11) **EP 3 492 834 B1**
(45) Date de publication et mention de la délivrance du brevet: **22.02.2023**
(21) Numéro de dépôt: 18208680.1
(22) Date de dépôt: 27.11.2018
(51) Int. Cl.: F24S 70/60, F24S 10/75

(54) **ABSORBEUR MUNI D'AILETTES D'ABSORPTION D'UN RAYONNEMENT INCIDENT ET CAPTEUR SOLAIRE COMPRENANT L'ABSORBEUR**
ABSORBER MIT RIPPEN ZUR AUFNAHME VON EINFALLENDER STRAHLUNG UND SOLARSENSOR UMFASSEND DEN ABSORBER
ABSORBER COMPRISING FINS FOR ABSORPTION OF INCIDENT RADIATION AND SOLAR SENSOR COMPRISING THE ABSORBER

(30) Priorité: 30.11.2017 FR 1761479
(43) Date de publication de la demande: 05.06.2019
(73) Titulaire: Commissariat à l'Énergie Atomique et aux Énergies Alternatives, 75015 Paris (FR)
(72) Inventeur: TANTOLIN, Christian, 38660 LUMBIN (FR)
(74) Mandataire: INNOV-GROUP

(56) Documents cités:
- WO-A1-2004/001302
- FR-A1- 2 311 999
- FR-A2- 2 546 616
- JP-A- H0 926 212
- US-A- 4 554 908
- US-A1- 2008 308 152
- US-A1- 2011 180 058
- US-B1- 6 581 589

## Description

### Domaine technique de l'invention

Le domaine technique de l'invention concerne celui des capteurs solaires, notamment de type centrale solaire à concentration, et plus particulièrement des absorbeurs pour de tels capteurs solaires.

### Etat de la technique

Il est connu d'utiliser un capteur solaire pour convertir de l'énergie issue d'un rayonnement solaire en chaleur en vue de transmettre cette chaleur à un fluide caloporteur. Typiquement, le capteur solaire peut comporter un récepteur muni d'une pluralité de tubes formant chacun un absorbeur dans lequel circule le fluide caloporteur. L'absorbeur comporte une surface d'absorption qui correspond à une surface recevant un rayonnement à absorber, aussi appelé rayonnement incident à l'absorbeur. L'efficacité de l'absorbeur à chauffer le fluide caloporteur dépend de la qualité de son absorption de l'énergie à partir du rayonnement incident, et de sa capacité à limiter les pertes thermiques vers l'extérieur aussi appelé milieu ambiant ou milieu extérieur. Le milieu ambiant peut correspondre à l'environnement extérieur (par exemple à l'air libre) dans lequel est placé l'absorbeur. Le fluide caloporteur peut quant à lui circuler à l'intérieur de l'absorbeur. Il existe essentiellement deux sources de pertes thermiques : la convection et le rayonnement infrarouge. Si l'on souhaite limiter la convection, il est connu de placer l'absorbeur dans un tube en verre mis sous vide, ou de confiner l'absorbeur dans une cavité fermée. Pour limiter les pertes par rayonnement infrarouge vers le milieu ambiant, il est généralement utilisé un matériau peu émissif dans l'infrarouge pour former la surface d'absorption. Le matériau utilisé pour former la surface d'absorption peut aussi former l'absorbeur, ou peut être un revêtement formé sur un support formant une partie de l'absorbeur. Notamment, on dit que la surface d'absorption de l'absorbeur est sélective : elle absorbe le rayonnement incident, et limite l'émission dans l'infrarouge. On comprend alors qu'il existe dans le domaine une problématique générale liée à l'amélioration de l'absorbance de l'absorbeur, notamment en vue d'augmenter l'efficacité, ou le rendement, de l'absorbeur à chauffer le fluide caloporteur.

Généralement, le capteur solaire peut comporter un réflecteur recevant un rayonnement solaire de sorte à générer, pour chaque absorbeur, un rayonnement incident audit absorbeur. Le réflecteur peut comporter une série de miroirs, par exemples placés au niveau du sol, et permettant de concentrer le rayonnement solaire sur le récepteur d'où il résulte que chaque absorbeur voit un rayonnement qui lui est incident.

Couramment, la qualité de l'absorbeur dépend d'une peinture, ou alternativement d'un dépôt de cermet, formant la surface d'absorption sur un support. Le cermet est un composé métal/céramique.

La peinture évoquée précédemment peut comporter par exemple du silicone et des pigments qui permettent d'améliorer l'absorbance de l'absorbeur dans le visible. On peut utiliser également des peintures à base de graphite. L'utilisation de la peinture présente un inconvénient de tenue dans le temps : l'amélioration de l'absorbance est donc limitée. En effet, une telle peinture peut se dégrader si la température de la peinture de l'absorbeur dépasse un certain seuil. Par ailleurs, un autre inconvénient de la peinture est qu'elle dégrade les propriétés optiques de l'absorbeur dans le domaine de l'infrarouge : il en résulte une augmentation des pertes thermiques vers le milieu ambiant par rayonnement infrarouge. De plus, une telle peinture est complexe à utiliser, notamment en regard de l'optimisation de l'épaisseur de peinture à appliquer, et elle présente une fragilité telle qu'elle peut être endommagée lors de phases de manutention de l'absorbeur, ou encore de maintenance de l'absorbeur. Pour conserver l'efficacité de la peinture, elle doit être régulièrement réappliquée : ceci présente un inconvénient car cela augmente les opérations de maintenance du capteur solaire au cours desquelles il n'est pas en fonctionnement. Outre les inconvénients liés à cette peinture, il existe toujours un besoin d'encore améliorer l'absorbance de l'absorbeur.

L'utilisation du cermet présente un inconvénient de coût, en effet, il est généralement déposé par des techniques de la microélectronique comme le dépôt physique par phase vapeur aussi connu sous le sigle PVD correspondant à « Physical Vapor Déposition » en langue anglaise, ou comme le dépôt chimique en phase vapeur aussi connu sous le sigle CVD pour « Chemical Vapor Deposition » en langue anglaise. De plus, en cas d'utilisation de tels dépôts, un autre inconvénient est qu'un tel absorbeur peut ensuite nécessiter de fonctionner sous vide car ces dépôts ne sont pas stables sous air ambiant, et peuvent s'oxyder sur des épaisseurs très fines. Par ailleurs, la tenue à la température de tels dépôts peut être amoindrie. Par ailleurs, l'épaisseur de cermet utilisé peut aussi avoir une influence sur le coefficient d'émission dans l'infrarouge de l'absorbeur. Outre les inconvénients liés à l'utilisation de cermet pour former la surface d'absorption, il existe toujours un besoin d'encore améliorer l'absorbance de l'absorbeur.

La demande internationale de brevet publiée sous le numéro WO 2004/001302 A1 décrit un absorbeur thermique à ailettes sous la forme de plaques.

Les documents US 2011/180058 A1 et US 4 554 908 A divulguent des absorbeurs pour capteur solaire.

### Objet de l'invention

L'invention tend à améliorer l'absorbance d'un absorbeur pour capteur solaire. De préférence, l'invention permet de remédier à un ou plusieurs des inconvénients précités.

On tend à cette amélioration de l'absorbance grâce à un absorbeur pour capteur solaire, ledit absorbeur étant apte à absorber un rayonnement incident audit absorbeur et issu d'un rayonnement solaire, cet absorbeur comportant des ailettes d'absorption du rayonnement incident, chaque ailette étant adjacente à au moins une autre desdites ailettes, lesdites ailettes comportant chacune :
- une extrémité dont au moins une partie est destinée à être orientée vers une région de provenance du rayonnement incident, et
- deux faces opposées convergeant l'une vers l'autre en direction de l'extrémité de ladite ailette, l'extrémité étant formée par un arrondi reliant les deux faces opposées de ladite ailette, caractérisé en ce qu'il comporte un élément en saillie disposé entre les ailettes d'un couple d'ailettes adjacentes, et en ce que, selon un plan de coupe longitudinal de l'absorbeur, l'élément en saillie présente un profil ayant une hauteur strictement inférieure aux hauteurs de profils des ailettes dudit couple d'ailettes adjacentes pris dans ledit plan de coupe.

En particulier, de telles ailettes permettent de favoriser les réflexions multiples du rayonnement incident à l'absorbeur entre les ailettes pour augmenter l'absorbance de l'absorbeur.

L'absorbeur peut comporter une ou plusieurs des caractéristiques suivantes :
- les ailettes présentent un comportement spéculaire ;
- les ailettes sont formées dans un matériau tel qu'elles présentent un coefficient d'absorption dans le visible et un coefficient d'émission dans l'infrarouge depuis leur surface, ledit coefficient d'absorption étant strictement supérieur audit coefficient d'émission ;
- les ailettes sont obtenues par déformation de matière ;
- les ailettes sont agencées selon un pas, et les ailettes présentent chacune un profil ayant une hauteur comprise entre 0,5 fois le pas et 2 fois le pas, ledit profil comportant un rayon de courbure compris entre 0,005 fois le pas et 0,1 fois le pas à l'extrémité de ladite ailette ;
- l'absorbeur comporte :
   - une surface d'absorption associée aux ailettes, et
   - une surface interne délimitant au moins une partie d'un canal de circulation d'un fluide caloporteur ;
- les ailettes sont formées en un matériau inoxydable.

L'invention est aussi relative à un capteur solaire comportant au moins un absorbeur tel que décrit, et les ailettes de l'absorbeur sont agencées de sorte qu'au moins une partie de l'extrémité de chaque ailette est orientée vers une région de provenance du rayonnement incident.

Le capteur solaire peut comporter une ou plusieurs des caractéristiques suivantes :
- le capteur solaire comporte le fluide caloporteur circulant dans l'absorbeur, ledit absorbeur étant soumis au rayonnement incident ;
- le capteur solaire comporte au moins un réflecteur pour orienter le rayonnement solaire en direction de l'absorbeur ;
- le capteur solaire comporte une pluralité d'absorbeurs chacun apte à coopérer avec un rayonnement qui lui est incident en vue de chauffer un fluide caloporteur.

### Description sommaire des dessins

D'autres avantages et caractéristiques ressortiront clairement de la description qui va suivre de modes particuliers de réalisation de l'invention donnés à titre d'exemples non limitatifs et représentés sur les dessins annexés dans lesquels :
- La figure 1 illustre un mode de réalisation d'un capteur solaire comprenant un absorbeur ;
- La figure 2 illustre une vue partielle d'une coupe longitudinale d'un absorbeur du type de celui représenté en figure 1 ;
- La figure 3 est une vue partielle d'une coupe longitudinale de l'absorbeur du type de celui représenté en figure 1 permettant de visualiser l'influence de deux ailettes adjacentes sur un rayonnement coopérant avec l'absorbeur ;
- La figure 4 est une vue partielle d'une coupe longitudinale de l'absorbeur centrée sur une ailette ;
- La figure 5 illustre une vue partielle d'une coupe longitudinale d'un absorbeur selon une réalisation de l'invention ;
- La figure 6 illustre un mode de réalisation du capteur solaire à plusieurs absorbeurs ;
- La figure 7 illustre une vue en coupe longitudinale d'une partie de l'absorbeur comportant une couche antireflet ;
- La figure 8 illustre une vue en coupe longitudinale d'une partie de l'absorbeur montrant une ailette en deux parties.

Dans ces figures, les mêmes références sont utilisées pour désigner les mêmes éléments.

Par ailleurs, les éléments représentés sur les figures ne sont pas nécessairement à l'échelle de manière à privilégier la clarté des figures.

### Description de modes particuliers de réalisation

Dans la présente description, par « à base de », on entend « comporte majoritairement ».

Dans la présente description, par « ordre de » en parlant d'une valeur, on entend cette valeur à plus ou moins 10%.

De manière générale, un absorbeur pour capteur solaire comporte une surface d'absorption d'un rayonnement incident à l'absorbeur. L'absorbeur présente un coefficient d'absorption dans le visible dépendant de l'absorbance de l'absorbeur. Cette absorbance et ce coefficient d'absorption sont notamment définis pour un rayonnement incident reçu à la surface d'absorption. Par la suite, l'absorbance et le coefficient d'absorption correspondent respectivement à l'absorbance dans le visible et au coefficient d'absorption dans le visible. Par ailleurs, l'absorbeur présente un coefficient d'émission dans l'infrarouge depuis sa surface d'absorption. Ce coefficient d'émission dans l'infrarouge est dépendant de l'émittance de l'absorbeur depuis sa surface d'absorption. Par la suite, l'émittance et le coefficient d'émission correspondent respectivement à l'émittance dans l'infrarouge et au coefficient d'émission dans l'infrarouge. Le comportement optique de l'absorbeur est dépendant de l'émittance de l'absorbeur et de l'absorbance de l'absorbeur. Du fait que l'absorbeur cherche à optimiser l'absorption dans le visible et limiter l'émission dans l'infrarouge, on parle de sélectivité de l'absorbeur : la surface d'absorption est dite sélective. Par surface sélective, ou sélectivité de l'absorbeur, on entend que l'on cherche à maximiser l'absorbance et à limiter l'émittance de l'absorbeur.

Par « visible », on entend préférentiellement des longueurs d'onde comprises entre 0,2µm et 2µm et issues du rayonnement incident.

Par « infrarouge », on entend préférentiellement des longueurs d'onde comprises entre 2µm et 20µm et émises par l'absorbeur. L'absorbeur est donc apte à émettre un rayonnement électromagnétique dans l'infrarouge depuis sa surface d'absorption du fait de sa température, cette température étant liée à l'absorption du rayonnement incident.

Le coefficient d'absorption de l'absorbeur dans le visible correspond à un ratio entre l'énergie absorbée et l'énergie incidente. Le coefficient d'absorption peut varier entre 0 et 1, il peut être vu comme le résultat d'un ratio par rapport au comportement d'un corps noir. L'absorbance correspond à la faculté d'absorption du rayonnement incident par l'absorbeur. L'absorbance peut alors être vue comme la capacité d'un milieu (le cas échéant l'absorbeur) à absorber un rayonnement.

L'absorbeur décrit est, de préférence, opaque à un rayonnement dont les longueurs d'onde associées sont comprises entre 200nm et 2000nm. Par « opaque » on entend que moins de 1% du rayonnement traverse la paroi de l'absorbeur. Cette opacité permet de favoriser l'absorbance de l'absorbeur pour ces longueurs d'onde.

Le coefficient d'émission de l'absorbeur dans l'infrarouge depuis sa surface d'absorption correspond au ratio entre l'énergie émise par sa surface d'absorption et l'énergie émise par une surface d'un corps noir de référence. Le coefficient d'émission peut varier entre 0 et 1. L'émittance correspond à la faculté d'émission du rayonnement considéré par l'absorbeur.

L'absorbeur décrit ci-après diffère notamment de l'art antérieur en ce qu'il comporte une surface extérieure, ou surface d'absorption, structurée de sorte à améliorer le coefficient d'absorption de l'absorbeur dans le visible, et de préférence tout en limitant l'augmentation du coefficient d'émission de l'absorbeur dans l'infrarouge depuis sa surface d'absorption.

Dans la présente description, un rayonnement incident issu d'un rayonnement solaire correspond à au moins une part du rayonnement solaire considéré, par exemple ayant subi, ou non, une ou plusieurs réflexions.

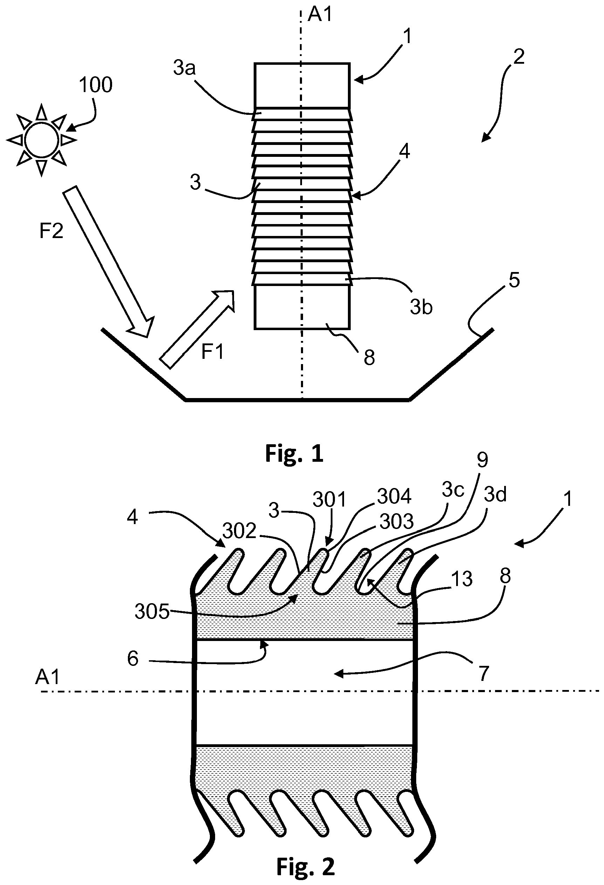

Comme illustré en figure 1, l'absorbeur 1 pour capteur solaire 2 est apte à absorber un rayonnement incident F1 audit absorbeur 1 et issu d'un rayonnement solaire F2. Sur la figure 1, le soleil émettant le rayonnement solaire F2 est représenté par la référence 100. Par la suite, la référence au rayonnement incident F1 correspond au rayonnement incident F1 à l'absorbeur 1. L'absorbeur 1 comporte des ailettes 3 d'absorption du rayonnement incident F1. Autrement dit, ce sont ces ailettes 3 qui captent le rayonnement incident F1 pour emmagasiner de la chaleur dans l'absorbeur 1 avant qu'au moins une partie de la chaleur emmagasinée soit restituée à un fluide caloporteur comme il le sera vu par la suite.

Dans la suite de la description, tout ce qui est décrit pour une ailette peut s'appliquer à chaque ailette.

Comme illustré en figures 1 et 2, chaque ailette 3 est adjacente à au moins une autre desdites ailettes. En fait, entre deux ailettes d'extrémités (référencées 3a et 3b en figure 1) de l'ensemble des ailettes 3, chaque ailette 3 est adjacente à deux ailettes : le nombre d'ailettes est donc strictement supérieur à trois ou supérieur ou égal à trois. Notamment, les ailettes 3 sont échelonnées selon un axe A1 (représenté en pointillé) aussi appelé axe d'échelonnement des ailettes 3. Cet axe A1 est notamment aussi un axe longitudinal de l'absorbeur 1. Comme visible en figure 2, les ailettes 3 comportent chacune une extrémité 301 et deux faces opposées 302, 303. Les deux faces opposées 302, 303 sont aussi appelés pans opposés, ou faces latérales opposées. Pour chaque ailette 3, deux faces opposées 302, 303 de ladite ailette 3 convergent l'une vers l'autre en direction de l'extrémité 301 de ladite ailette 3. L'extrémité 301 de chacune des ailettes 3 est formée par un arrondi 304 reliant les deux faces opposées 302, 303 de ladite ailette 3. La présence de ces ailettes 3 permet d'améliorer l'absorbance de l'absorbeur 1 (notamment d'améliorer le coefficient d'absorption dans le visible de l'absorbeur 1) en favorisant des réflexions du rayonnement incident F1 entre les ailettes 3. En effet, pour tout couple d'ailettes adjacentes 3c, 3d (figure 2), il est formé un espace de réflexion 13, aussi appelé cavité de réflexion, du rayonnement incident F1. La réflexion du rayonnement incident F1 entre les ailettes 3 permet d'orienter une ou plusieurs réflexions du rayonnement incident F1 vers au moins une portion de l'absorbeur 1 en vue qu'une partie de l'énergie de chaque réflexion du rayonnement incident F1 orientée vers ladite portion de l'absorbeur 1 puisse être absorbée à son tour. Les formes arrondies des extrémités 301 des ailettes 3 et la convergence des faces opposées 302, 303 permettent de favoriser les réflexions du rayonnement incident F1 dans les espaces de réflexion 13. Par ailleurs, l'arrondi 304 et la convergence des faces opposées 302, 303 permettent de minimiser la surface d'une partie supérieure de l'ailette 3 (opposée à une base 305 de l'ailette 3) pour laquelle le rayonnement réfléchi serait renvoyé vers le milieu ambiant et pas en direction de l'absorbeur 1 : ce rayonnement réfléchi vers le milieu ambiant est donc perdu, et son énergie n'est pas absorbée. Par ailleurs, sans la convergence des faces 302, 303 évoquée, la tenue mécanique de l'ailette 3 serait limitée, et la transmission de chaleur vers la base 305 de l'ailette 3 en direction du fluide caloporteur se ferait de manière moins efficace. En particulier, chacune, ou plus généralement au moins une partie de chacune, des extrémités 301 des ailettes 3 est destinée à, c'est-à-dire agencée de sorte à, être orientée vers une région de provenance du rayonnement incident F1, ceci ayant aussi pour but de favoriser les réflexions du rayonnement incident F1 entre les ailettes 3. Selon une autre formulation, les ailettes 3 comportent préférentiellement chacune une extrémité 301 dont au moins une partie est destinée à être orientée vers une région de provenance du rayonnement incident F1. Les surfaces des ailettes 3 sont incluses dans la surface d'absorption 4 de l'absorbeur 1, on dit aussi que les ailettes 3 participent à délimiter la surface d'absorption 4 (figures 1 et 2).

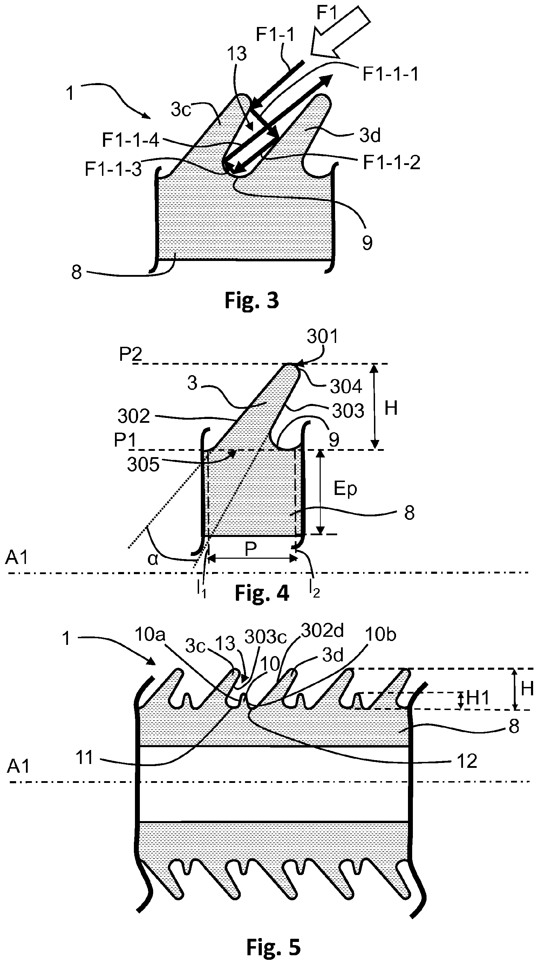

La figure 3 montre la coopération du rayonnement incident F1 avec deux ailettes adjacentes 3c, 3d respectivement appelées première ailette 3c et deuxième ailette 3d. Sur la figure 3, une partie F1-1 du rayonnement incident F1 vient en contact avec la première ailette 3c, provoquant des réflexions (ici au nombre de quatre) F1-1-1, F1-1-2, F1-1-3, F1-1-4 entre la première ailette 3c et la deuxième ailette 3d. A chaque réflexion une portion du rayonnement incident F1 est absorbée par l'absorbeur 1. Dès lors, les ailettes 3 permettent d'améliorer l'absorbance de l'absorbeur 1 de telle sorte qu'il n'est pas nécessaire d'avoir recours à une peinture, ou à un dépôt de cermet, tel que visé dans l'état de la technique pour obtenir un absorbeur dont le coefficient d'absorption est satisfaisant. Il en résulte que l'absorbeur 1 permet de remédier, le cas échéant, au moins en partie aux inconvénients cités dans l'état de la technique. Cependant, le principe des ailettes 3 peut aussi s'appliquer si la surface d'absorption est formée par une peinture, ou par du cermet, comme il le sera décrit ci-après.

Comme le montre la figure 1, l'invention est aussi relative au capteur solaire 2, aussi appelé centrale solaire, qui comporte alors au moins un absorbeur 1 tel que décrit. Notamment, au sein du capteur solaire 2, les ailettes 3 sont agencées de sorte qu'au moins une partie de l'extrémité 301 de chaque ailette 3 est orientée vers la région de provenance du rayonnement incident F1. Ceci permet de favoriser les réflexions du rayonnement incident F1 entre les ailettes 3. En figure 1, la région de provenance est définie par un réflecteur 5 du capteur solaire 2. Le réflecteur 5 réfléchit le rayonnement solaire F2 en direction de l'absorbeur 1, ici le rayonnement solaire réfléchi permet de définir le rayonnement indicent F1.

L'absorbeur 1 est notamment apte à chauffer le fluide caloporteur. Autrement dit, l'absorbeur 1 permet, d'une part, de récupérer de la chaleur (c'est-à-dire des calories) depuis le rayonnement incident F1, et, d'autre part, de transmettre de la chaleur au fluide caloporteur. En ce sens, comme illustré en figure 2, l'absorbeur 1 peut comporter la surface d'absorption 4 associée aux ailettes 3 (notamment des portions de la surface d'absorption 4 sont délimitées par les ailettes 3), et une surface interne 6 pouvant délimiter un canal de circulation 7 du fluide caloporteur, ou au moins une partie de ce canal de circulation 7. La surface interne 6 peut être telle que le canal de circulation 7 qu'elle délimite présente une section fermée. Un tel absorbeur 1 présente l'avantage de permettre une transmission directe, par l'absorbeur 1, de l'énergie du rayonnement incident F1 au fluide caloporteur pour le chauffer. Par « transmission directe », on entend que l'absorbeur 1 récupère de la chaleur via sa surface d'absorption 4, et que cette chaleur est transmise par conduction thermique dans l'absorbeur 1 jusqu'à la surface interne 6 qui transmet alors de la chaleur au fluide caloporteur par convection. Notamment, l'absorbeur 1 est un tube. Ainsi, dans une configuration de fonctionnement du capteur solaire 2, ce dernier peut comporter le fluide caloporteur circulant dans l'absorbeur 1, et le rayonnement incident F1 chauffe le fluide caloporteur par l'intermédiaire de l'absorbeur 1 : on dit aussi que l'absorbeur 1 est soumis au rayonnement incident F1. Le fluide caloporteur peut être de l'eau, une huile, du sel (comme par exemple des sels de sodium et de potassium dont la température de fusion est de 300°C).

Comme illustré en figure 4, chaque ailette 3 peut présenter un profil (ou motif), notamment obtenu selon une coupe dite transversale de l'ailette 3. Ce profil comporte des contours issus des deux faces opposées 302, 303 de l'ailette 3, de l'arrondi 304 de l'ailette 3 formant l'extrémité 301 de l'ailette 3, ainsi que de la base 305 de l'ailette 3. La base 305 de chaque ailette 3 est notamment solidaire d'un support 8 (visible notamment en figures 1 à 4) commun aux ailettes 3. L'absorbeur 1 comporte ce support 8. Ce support 8 forme notamment une paroi entre les ailettes 3 et le canal de circulation 7 du fluide caloporteur. Cette paroi peut délimiter la surface interne 6 de l'absorbeur 1 permettant de transférer la chaleur absorbée par les ailettes 3 au fluide caloporteur circulant dans l'absorbeur 1. Notamment, pour chaque ailette 3, l'extrémité 301 de l'ailette 3 est une extrémité distale de la base 305 de ladite ailette 3, et plus particulièrement distale du support 8 et/ou du canal de circulation 7 du fluide caloporteur, alors que la base 305 est dite proximale du canal de circulation 7 et/ou du support 8. Dans le référentiel de l'ailette 3, on dit aussi que le profil de l'ailette 3 présente un sommet formé par l'arrondi 304, et opposé à une base du profil délimitée par la base 305 de l'ailette 3.

Chaque ailette 3 peut présenter une dimension caractéristique (aussi appelée hauteur H, voir figure 4, de l'ailette 3 dans le référentiel de l'ailette 3), une longueur et une largeur. Notamment, la hauteur d'une ailette 3 correspond à sa hauteur par rapport au support 8 depuis lequel elle s'étend. La largeur de l'ailette 3 est donnée selon l'axe A1 d'échelonnement des ailettes 3, et correspond notamment à la distance séparant les deux faces opposées 302, 303 de l'ailette 3 (figure 4). On comprend, du fait de la convergence des deux faces opposées 302, 303 de l'ailette 3, que sa largeur varie entre sa base 305 et son extrémité 301. En fait, la convergence des faces opposées 302, 303 de l'ailette 3 l'une vers l'autre est telle que la distance de séparation des deux faces opposées 302, 303 dans une région de l'ailette 3 proximale de la base 305 de l'ailette 3 est plus importante que la distance de séparation des deux faces opposées 302, 303 de l'ailette 3 dans une région de l'ailette 3 distale de la base 305 de l'ailette 3 mais proximale de l'extrémité 301 de l'ailette 3. L'extrémité 301 de l'ailette 3 forme un bord, notamment dit « bord libre » ou « bord supérieur » ou « partie supérieure de l'ailette 3 », qui est opposé à la base 305 de l'ailette 3 formant une partie inférieure de l'ailette 3. Ce bord de l'ailette 3 s'étend selon la longueur de l'ailette 3. Une telle convergence des faces opposées des ailettes présente l'avantage de favoriser le transfert thermique vers la base 305 de l'ailette 3, et de limiter l'effet de corps noir (pertes par émission). Notamment, l'angle de convergence (noté α en figure 4) de deux faces opposées 302, 303 d'une même ailette 3 est compris entre 10 degrés et 30 degrés.

La dimension caractéristique de l'ailette 3 peut être mesurée selon une direction orthogonale à l'axe d'échelonnement A1 des ailettes 3 : on parle alors de dimension caractéristique de l'ailette 3 entre sa base 305 et son extrémité 301. En particulier, chaque ailette 3 présente un profil ayant une hauteur H, notamment mesurée entre la base du profil de l'ailette 3 et un sommet du profil de l'ailette 3 situé à l'extrémité 301 de l'ailette 3. La hauteur H du profil est notamment mesurée de manière orthogonale à l'axe A1. Notamment, la base du profil de l'ailette 3 est proximale du support 8, et le sommet du profil de l'ailette 3 est distale du support 8. En particulier, en prenant le profil de l'ailette 3 de la figure 4, la hauteur H du profil de l'ailette 3 est définie comme la distance séparant deux plans P1, P2 (représentés chacun par une ligne en pointillé) parallèles dont l'un (le plan P1) passe par la base du profil de l'ailette 3 et l'autre (le plan P2) passe par le sommet du profil de l'ailette 3 en un point le plus éloigné du plan P1. En particulier, en figure 4 les plans P1 et P2 sont orthogonaux au plan de représentation de la figure 4. Selon sa longueur, l'ailette 3 peut être rectiligne, courbée, ou peut adopter la forme d'une boucle. Par exemple, en figure 1, chaque ailette 3, dite de forme circulaire, entoure le support 8 formant un support tubulaire autorisant la circulation du fluide caloporteur en son sein. Ainsi, le profil de l'ailette 3 peut être défini par une courbe plane (figure 4), dont la rotation, par exemple autour de l'axe A1, définit une surface de révolution délimitant une surface extérieure de l'ailette 3. Le profil de l'ailette 3 peut être de dimensions constantes sur toute la longueur de l'ailette. Alternativement, les dimensions de l'ailette 3 peuvent varier selon la longueur de l'ailette 3 pour, par exemple tenir, compte des variations d'intensité du flux du rayonnement incident selon la longueur de l'ailette 3 : ceci permet selon les cas de maximiser l'absorbance dans le visible de certaines portions de l'ailette 3 et de minimiser l'émittance dans l'infrarouge d'autres portions de l'ailette 3.

Toujours dans le but d'améliorer le coefficient d'absorption de l'absorbeur 1, les ailettes 3 présentent préférentiellement un comportement spéculaire, notamment dans le visible. Le comportement spéculaire permet de favoriser une réflexion non diffuse d'un rayonnement, c'est-à-dire selon une direction préférée, en particulier selon un angle solide de quelques degrés. Par « angle solide de quelques degrés », on entend un angle de plus ou moins 5 degrés par rapport à l'angle de réflexion du rayonnement. Par comportement spéculaire, on entend notamment que 90% de l'énergie réfléchie l'est dans l'angle solide évoqué. Le comportement spéculaire présente l'avantage de concentrer le rayonnement réfléchi dans une seule direction : ceci favorise l'absorption, par l'absorbeur 1, d'un rayonnement incident réfléchi venant à nouveau en contact avec l'absorbeur 1. Un autre avantage du comportement spéculaire est qu'il permet d'éviter de renvoyer le rayonnement vers le milieu ambiant où il serait perdu. On dit aussi que les surfaces des ailettes 3 présentent un comportement spéculaire dans le visible : l'aspect de surface des ailettes 3 est alors peu rugueux et permet un effet « miroir ». Par « peu rugueux », on entend préférentiellement que le paramètre Ra est strictement inférieur à 1 micromètre, Ra correspondant à la rugosité moyenne arithmétique d'un profil considéré.

De préférence, les ailettes 3 sont obtenues par moletage, notamment d'un substrat destiné à former l'absorbeur 1. Par substrat, on entend ici un support physique servant de base pour former l'absorbeur 1. Le substrat peut alors être un tube dont la surface à moleter est initialement lisse. Un tel moletage permet de favoriser l'obtention d'un aspect de surface adapté des ailettes 3 pour que ces dernières présentent le comportement spéculaire évoqué ci-avant. De manière plus générale, les ailettes 3 sont préférentiellement obtenues par déformation de matière, notamment par déformation du substrat, plutôt que par usinage du substrat. En effet, la déformation du substrat limite la rugosité de surface des ailettes 3, favorisant ainsi le comportement spéculaire de ces dernières. Ainsi, la déformation de la matière constituant le substrat peut permettre d'obtenir le support 8 à partir duquel s'étendent les ailettes 3. Pour former les ailettes 3, tout procédé permettant d'obtenir des surfaces lisses peut être utilisé comme, par exemple, un procédé d'extrusion ou un procédé de laminage. Bien que cela ne soit pas préféré, un procédé d'usinage par enlèvement de matière peut aussi être utilisé pour former les ailettes 3 de l'absorbeur 1 : dans ce cas un polissage des surfaces des ailettes 3 est réalisé après usinage pour obtenir des surfaces d'ailette lisses. Autrement dit, un procédé de fabrication de l'absorbeur peut comporter une étape de fourniture du substrat, puis une étape de modification de ce substrat, préférentiellement par déformation du substrat, pour former l'absorbeur 1 notamment tel que décrit.

De préférence, les ailettes 3 et le support 8, ou au moins une partie de chaque ailette 3 et le support 8 forment une continuité de matière. On entend par là que les ailettes 3, ou lesdites au moins une partie de chacune des ailettes 3, et le support 8 sont formés dans un même matériau adoptant la forme d'une pièce monolithique. L'utilisation d'un seul matériau pour former une pièce monolithique présente l'avantage de maîtriser le coût de fabrication de la pièce, et l'avantage d'obtenir un meilleur comportement thermique de la pièce pour l'application consistant à chauffer un fluide caloporteur.

Comme évoqué précédemment, dans le cadre du capteur solaire 2, au moins une partie de l'extrémité 301 de chacune des ailettes 3 est orientée vers une région de provenance du rayonnement incident F1 de sorte à favoriser la réflexion du rayonnement incident F1 entre les ailettes 3. Plus particulièrement, pour permettre cette orientation, chaque ailette 3 est inclinée par rapport à sa base 305. Autrement dit, chaque ailette 3 s'étend depuis sa base 305 jusqu'à son extrémité 301 selon un axe d'inclinaison par rapport à sa base 305. Cet axe d'inclinaison est notamment sensiblement parallèle à la direction du rayonnement incident F1. Par sensiblement parallèle, il est ici entendu parallèle à plus ou moins dix degrés. Selon une autre formulation, les ailettes 3 peuvent présenter une inclinaison, notamment par rapport au support 8, dépendante de la direction du rayonnement incident F1, notamment de sorte à placer les ailettes 3 dans l'axe du rayonnement incident F1 dans le cadre du capteur solaire 2. Du point de vue du profil de l'ailette 3, l'inclinaison est notamment telle qu'en prenant une première droite perpendiculaire à un point médian de la base du profil, et une deuxième droite passant par ce point médian et par le sommet du profil, il est formé un angle différent de zéro entre la première droite et la deuxième droite. L'inclinaison décrite permet d'optimiser l'absorbance de l'absorbeur 1 dans le visible. Le cas échéant, cette inclinaison est notamment donnée par rapport à l'axe longitudinal A1.

Les ailettes 3 peuvent être formées dans un matériau tel que lesdites ailettes présentent un coefficient d'absorption dans le visible et un coefficient d'émission dans l'infrarouge depuis leur surface, le coefficient d'absorption des ailettes est alors strictement supérieur audit coefficient d'émission des ailettes. Ceci est préféré mais pas indispensable dans le sens où l'émission se fait dans l'infrarouge sur une plage spectrale réduite par rapport au visible : il faut juste au final que l'absorption du rayonnement incident depuis les surfaces des ailettes permette d'absorber plus d'énergie que ces surfaces des ailettes en émettent vers le milieu ambiant. En particulier, l'absorbeur 1 est à base de ce matériau. Ceci permet la sélectivité de l'absorbeur 1, notamment de sa surface d'absorption 4, vis-à-vis des échanges par rayonnement pour améliorer le coefficient d'absorption dans le visible de l'absorbeur 1, et pour limiter le coefficient d'émission dans l'infrarouge de l'absorbeur 1 depuis sa surface d'absorption 4. De préférence, la sélectivité obtenue permet à l'absorbeur 1 de présenter un fort coefficient d'absorption dans le visible, et un faible coefficient d'émission dans l'infrarouge depuis sa surface d'absorption. Dans la présente description, un fort coefficient d'absorption dans le visible est strictement supérieur à 0,8 et un faible coefficient d'émission dans l'infrarouge est strictement inférieur à 0,4. Ce matériau formant les ailettes 3 peut être de l'inox, ou peut être choisi parmi des aciers réfractaires. Le support 8 évoqué précédemment peut être formé dans le même matériau que celui formant les ailettes 3. Vis-à-vis du matériau choisi, la structuration d'un substrat pour y former des ailettes 3 de sorte à obtenir l'absorbeur 1 tel que décrit permet à cet absorbeur 1 de présenter, via sa surface d'absorption 4, une sélectivité telle que son coefficient d'absorption dans le visible est plus important que celui du substrat avant structuration des ailettes 3, et telle que son coefficient d'émission dans l'infrarouge est plus élevé que celui du substrat avant structuration des ailettes 3.

De manière préférée, les ailettes 3 sont formées en un matériau inoxydable. L'avantage d'un matériau inoxydable est que les propriétés optiques des ailettes 3 vont rester constantes même si la surface extérieure de l'absorbeur 1 est soumise à une atmosphère oxydante : il n'y aura pas de vieillissement de l'absorbeur 1 du point de vue de l'oxydation. Ainsi, les ailettes 3 peuvent directement être soumises à l'air extérieur sans nécessiter l'utilisation d'une protection sous vide. Pour cela, le matériau inoxydable peut être un acier inoxydable, par exemple choisi parmi un acier inoxydable de type 316, un acier inoxydable de type 316L, un acier inoxydable de type 304, et un acier inoxydable de type 304L. Les types d'acier inoxydable évoqués ci-dessus sont notamment normalisés selon la norme EN 10027-1.

Selon un exemple, les ailettes 3 sont agencées selon un pas, notamment de valeur prédéterminée. Un pas correspond à la distance selon laquelle le profil ou le motif d'ailette 3 se répète, le pas est alors aussi appelé pas de répétition des ailettes 3, ou pas d'échelonnement des ailettes 3. Par exemple, le pas est la distance séparant les extrémités 301 de deux ailettes adjacentes. Sur la figure 4, la référence P représente le pas mesuré (entre deux lignes en pointillé l₁ et l₂) à un autre endroit que celui des extrémités de deux ailettes adjacentes. De préférence, la hauteur du profil de chacune des ailettes 3 est comprise entre 0,5 fois le pas et 2 fois le pas, et ledit profil comporte un rayon de courbure compris entre 0,005 fois le pas et 0,1 fois le pas à l'extrémité 301 de ladite ailette 3 (ce rayon de courbure est donc situé à l'extrémité 301 de ladite ailette 3). En complément, la hauteur H du profil des ailettes 3 peut se mesurer orthogonalement à la direction d'échelonnement des ailettes 3 selon le pas. De préférence, le ratio hauteur sur pas est de l'ordre de 1. Ce rayon de courbure du profil de l'ailette 3 délimite, notamment, le sommet du profil de l'ailette 3. Autrement dit, l'extrémité 301 de chaque ailette peut présenter un profil ayant un rayon de courbure compris entre 0,005 fois le pas et 0,1 fois le pas. Ces dimensionnements particuliers permettent d'augmenter le coefficient d'absorption de l'absorbeur 1 dans le visible en favorisant les réflexions multiples du rayonnement incident audit absorbeur 1, tout en limitant l'augmentation du coefficient d'émission dans l'infrarouge de l'absorbeur 1 depuis sa surface d'absorption 4. En particulier, pour chaque ailette 3, la forme du profil de l'ailette peut rester la même sur toute la longueur de l'ailette 3. Autrement dit, pour toute section de l'ailette 3 réalisée transversalement à l'allongement de l'ailette 3, le profil de l'ailette 3 selon ladite section reste le même. Par ailleurs, si l'absorbeur 1 présente une ou plusieurs régions non soumises au rayonnement incident, préférentiellement, les ailettes ne sont pas présentes, ou ne se prolongent pas, dans ces régions pour limiter les déperditions vers le milieu ambiant. Par ailleurs, comme évoqué précédemment, les dimensions d'une ailette peuvent varier selon sa longueur pour prendre en compte des variations de flux du rayonnement incident dépendantes de la structure du capteur solaire.

Selon un exemple illustré en figures 2 à 4, pour au moins un couple d'ailettes adjacentes 3c, 3d, l'absorbeur 1 comporte un congé 9 reliant une des faces opposées de l'une des ailettes 3c du couple d'ailettes adjacentes 3c, 3d à une des faces opposées de l'autre des ailettes 3d dudit couple d'ailettes adjacentes 3c, 3d. Le congé 9 correspond à une surface permettant de raccorder progressivement deux faces latérales adjacentes de deux ailettes adjacentes 3c, 3d. Le congé 9 présente une surface concave qui peut alors former une portion correspondante de la surface d'absorption 4. Un tel congé 9 présente l'avantage d'éviter à l'espace de réflexion 13 située entre deux ailettes adjacentes de se comporter comme un corps noir, ce qui aurait pour conséquence d'augmenter l'émission dans l'infrarouge par l'absorbeur 1 depuis sa surface d'absorption 4. La présence du congé 9 permet également de réfléchir, le cas échéant, le rayonnement incident vers l'une des faces opposées 302, 303 et de limiter la réflexion vers le milieu ambiant. De préférence, pour tout couple d'ailettes adjacentes 3c, 3d, un congé 9 relie une des faces opposées de l'une des ailettes 3c dudit couple à une des faces opposées de l'autre des ailettes 3d dudit couple. En particulier, la présence d'un ou de tels congés 9 est préférée lorsque le ratio pas sur hauteur H est strictement inférieur ou égal à 1.

De préférence, dans le cas où un congé 9 relie deux faces de deux ailettes adjacentes 3c, 3d (figure 2), le congé 9 présente un profil ayant un rayon de courbure compris entre 0,02 fois le pas et 0,5 fois le pas. Ceci présente l'avantage de limiter l'effet de corps noir entre les ailettes adjacentes.

Selon le mode de réalisation tel qu'illustré en figure 5, l'absorbeur 1 comporte un élément en saillie 10 disposé entre les ailettes 3c, 3d d'un couple d'ailettes adjacentes 3c, 3d. Selon un plan de coupe longitudinal de l'absorbeur 1, l'élément en saillie 10 présente un profil ayant une hauteur H1 strictement inférieure aux hauteurs H des profils des ailettes 3c, 3d du couple d'ailettes adjacentes 3c, 3d pris dans ledit plan de coupe. De manière plus générale, on dit aussi que, la hauteur H des ailettes adjacentes 3c, 3d est strictement supérieure à la hauteur H1 de l'élément en saillie 10 situé entre les ailettes adjacentes 3c, 3d, ces hauteurs H1, H se mesurant localement selon un axe orthogonal à l'axe A1. Notamment, cet élément en saillie 10 est en saillie du support 8, et en particulier la hauteur de cet élément en saillie 10 est une dimension caractéristique mesurée localement depuis le support 8 à partir duquel il s'élève selon un axe orthogonal à l'axe A1. L'élément en saillie 10 peut s'étendre, selon sa longueur, le long des ailettes adjacentes 3c, 3d entre lesquelles il est situé. En particulier, l'élément en saillie 10 est relié à l'une des faces 303c opposées de l'une des ailettes 3c du couple d'ailettes adjacentes 3c, 3d par un premier congé 11, et est relié à l'une des faces 302d opposées de l'autre des ailettes 3d du couple d'ailettes adjacentes 3c, 3d par un deuxième congé 12. Autrement dit, l'élément en saillie 10 est agencé dans un fond de l'espace, ou de la cavité, de réflexion 13, situé entre les deux ailettes du couple d'ailettes adjacentes 3c, 3d correspondant. La présence de cet élément en saillie 10 permet d'améliorer la réflexion de rayonnement entre les ailettes 3 si l'espace entre les ailettes adjacentes 3c, 3d est important d'où il résulterait des pertes par réflexion vers le milieu ambiant. Typiquement pour améliorer l'absorbance de l'absorbeur 1, la hauteur H1 de l'élément en saillie 10 peut être comprise entre 5% et 50% de la hauteur H des ailettes 3. Un espace entre ailettes adjacentes est considéré comme important lorsque le pas est strictement supérieur à la hauteur H du profil des ailettes 3. Autrement dit, la présence de l'élément en saillie 10 entre deux ailettes adjacentes 3c, 3d est avantageuse lorsque le ratio du pas sur la hauteur du profil des ailettes adjacentes est strictement supérieur à 1. Notamment, pour tout couple d'ailettes adjacentes 3c, 3d, ledit absorbeur 1 peut comporter un élément en saillie 10 tel que décrit. A titre d'exemple, la portion de l'absorbeur 1 de la figure 5 montre cinq ailettes 3, et donc quatre éléments en saillie 10. L'élément en saillie 10 peut présenter une extrémité formée par un arrondi reliant deux faces latérales 10a, 10b opposées dudit élément en saillie 10, chacune des faces latérales 10a, 10b opposées de l'élément en saillie 10 étant en regard d'une face 303c, 302d d'une ailette 3c, 3d à laquelle elle est reliée via un congé correspondant. Les faces latérales de l'élément en saillie 10 sont notamment convergentes de sorte à minimiser le rayon de courbure au sommet du profil de l'élément en saillie 10 pour éviter les réflexions vers le milieu ambiant. Ici, on cherche à minimiser le rayon de courbure du sommet du profil de l'élément en saillie 10. Les rayons de courbure des premier et deuxième congés 11, 12 peuvent être identiques. En particulier, les rayons de courbure du premier congé 11 et du deuxième congé 12 peuvent être chacun compris entre 0,05 fois le pas et 0,2 fois le pas. Concernant le sommet du profil de l'élément en saillie 10, son rayon de courbure peut être compris entre 0,005 fois le pas et 0,05 fois le pas.

Il est à présent décrit un exemple particulier pour lequel chaque ailette 3 présente un profil de hauteur H égale à 0,78mm, et pour lequel le pas de répétition des ailettes 3 est égal à 0,85mm. Dans cet exemple, le rayon de courbure du profil de l'extrémité 301 de chaque ailette 3 peut être compris entre 4,25µm et 85µm, et préférentiellement est strictement inférieur à 25µm. Selon cet exemple, si des congés 9 relient les faces de deux ailettes adjacentes, le rayon de courbure du profil de chaque congé 9 peut être compris entre 17µm et 425µm. Selon cet exemple, la hauteur H1 du profil de cet élément en saillie 10 est de 230µm. Par ailleurs, selon cet exemple, l'inclinaison de chacune des ailettes 3 peut être comprise entre 25 degrés et 45 degrés si le capteur solaire est une centrale solaire à tour, ou comprise entre 10 degrés et 30 degrés si le capteur solaire 2 est une centrale de Fresnel. L'inclinaison optimale des ailettes 3 est liée à la latitude de la centrale solaire, et à ses caractéristiques (le cas échéant la hauteur d'une tour comportant l'absorbeur du capteur solaire, et/ou la taille du champ solaire du capteur solaire). Toujours selon la hauteur H et le pas donnés dans cet exemple particulier, l'angle de convergence entre les faces opposées d'une même ailette peut être compris entre 10 degrés et 60 degrés, et préférentiellement égal à 20 degrés. Les dimensionnements donnés dans le présent paragraphe permettent d'obtenir absorbeur 1 avec des propriétés optiques satisfaisantes.

Selon un autre exemple particulier plus précis tel qu'illustré en figure 4, la hauteur H du profil de chaque ailette 3 est égale à 0,8mm, la pas P est égal à 0,85mm, le rayon de courbure du profil de l'extrémité 301 de chacune des ailettes 3 est égal à 70µm, le rayon de courbure du profil de chaque congé 9 reliant les faces adjacentes de deux ailettes adjacentes est de 250µm, l'angle de convergence α entre les deux faces opposées 302, 303 de chaque ailette 3 est de 10 degrés. L'épaisseur Ep du support 8 commun à toutes les ailettes 3 est de 1mm. Cet autre exemple donne des caractéristiques précises qui en pratique peuvent être adaptées. Notamment, l'adaptation de ces caractéristiques peut dépendre du substrat de base à partir duquel les ailettes 3, et le cas échéant le support 8, sont formés ainsi que des propriétés optiques recherchées. En particulier, si le coefficient d'absorption dans le visible du substrat de base est élevé (strictement supérieur à 0,9), alors la structuration de ce substrat de base pour former les ailettes 3 est dite légère, c'est-à-dire que le ratio hauteur du profil des ailettes sur le pas est strictement inférieur à 0,5, notamment sur toute la longueur des ailettes 3. Au contraire, si le coefficient d'absorption dans le visible du substrat de base est faible (strictement inférieur à 0,8), et que l'on souhaite significativement l'augmenter, les ailettes 3 sont alors formées par une structuration profonde du substrat de base, c'est-à-dire que le ratio hauteur du profil des ailettes sur le pas est strictement supérieur à 1. L'exemple particulier de la figure 4 permet à partir d'un substrat de base présentant, avant formation des ailettes 3, un coefficient d'absorption dans le visible de 0,8 et un coefficient d'émission dans l'infrarouge de 0,1, de passer après sa structuration à un coefficient d'absorption dans le visible de 0,95 et à un coefficient d'émission dans l'infrarouge de 0,2 au niveau des motifs structurés dont le profil est visible en figure 4.

encore un autre exemple qui n'est pas selon l'invention et pour lequel il est préférable de ne pas avoir d'éléments en saillie, les caractéristiques de l'absorbeur 1 sont les suivantes : la hauteur H du profil des ailettes 3 est égal à 0,88mm ; le pas est égal à 0,7mm ; le rayon de courbure du sommet du profil de chaque ailette 3 est de 40µm ; le rayon de courbure du profil de chacun des congés 9 est de 240µm ; l'angle de convergence entre les faces 302, 303 opposées de chacune des ailettes est de 10 degrés ; et l'inclinaison des ailettes est adaptée au capteur solaire 2 dans lequel l'absorbeur est utilisé.

Il résulte de ce qui a été décrit précédemment que du point de vue du comportement optique, seul le ratio hauteur du profil des ailettes sur le pas est un paramètre sensible : si on conserve un ratio de 1 en doublant la valeur du pas, et donc celle de la hauteur, le profil des ailettes 3 adopte la même forme et les mêmes dimensions, il n'y aura qu'un effet d'échelle, et les résultats en termes de coefficient d'absorption de l'absorbeur 1 dans le visible et de coefficient d'émission de l'absorbeur 1 dans l'infrarouge ne sont pas modifiés. Ainsi, les dimensions du profil des ailettes pourront être adaptées en fonction des contraintes de fabrication, mais également en fonction de l'application et des gradients de température résultants qui pourraient être induits, lors de l'utilisation de l'absorbeur 1, dans le matériau utilisé pour former l'absorbeur 1. En effet, dans le cas de densité de flux solaire très élevée (par exemple pour un facteur de concentration solaire de 600 dans le cadre d'une centrale solaire à tour), le gradient thermique au sein des ailettes peut devenir significatif et peut conduire à un échauffement des extrémités des ailettes. Un tel échauffement peut se traduire par des pertes thermiques supplémentaires, ce qui revient à augmenter le coefficient d'émission dans le domaine infrarouge. Ainsi, les dimensions des ailettes peuvent être adaptées pour limiter ce phénomène d'échauffement et ses conséquences.

Il a été donné des exemples ci-dessus à l'échelle millimétrique, c'est-à-dire que le pas et la hauteur du profil des ailettes peuvent être notamment strictement supérieur à 1µm et strictement inférieur ou égal à 10mm. Les dimensions de la structuration de l'absorbeur à l'échelle millimétrique permettent d'obtenir un absorbeur 1 peu sensible aux agressions extérieures : il n'y a pas besoin de placer l'absorbeur 1 sous vide, sa surface extérieure peut directement être au contact du milieu ambiant. Par ailleurs, un tel dimensionnement procure une résistance mécanique des ailettes 3 adaptée à la manutention, ou aux efforts mécaniques que pourraient subir de telles ailettes 3.

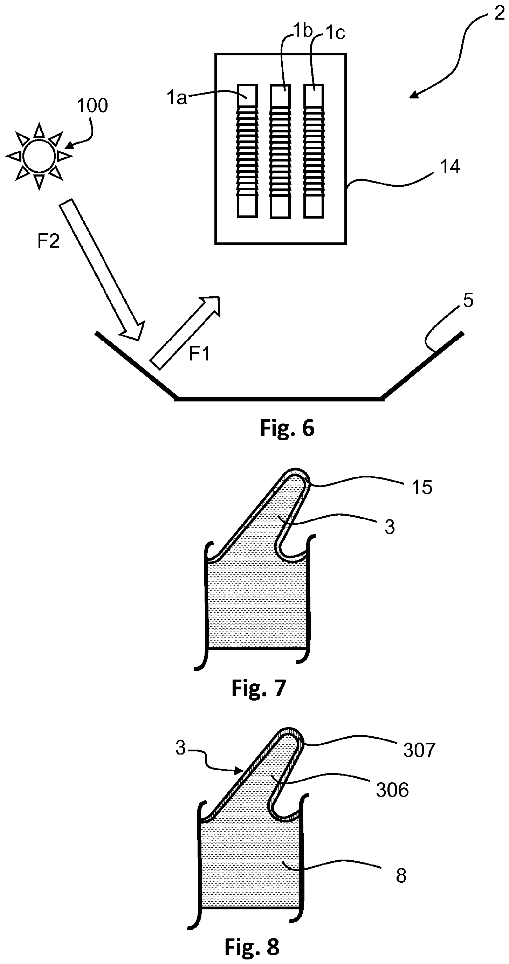

Comme illustré en figure 6, le capteur solaire 2 peut comporter une pluralité d'absorbeurs 1a, 1b, 1c, chacun apte à coopérer avec un rayonnement F1 qui lui est incident en vue de chauffer un fluide caloporteur circulant en son sein. Chaque absorbeur 1a, 1b, 1c peut être tel que décrit précédemment, et peut appartenir à un récepteur 14 du capteur solaire 2. Le récepteur est 14 est un élément du capteur solaire 2 vers lequel au moins un réflecteur 5 concentre le rayonnement solaire F2 (issu du soleil 100) incident audit réflecteur 5. Ceci présente l'avantage d'augmenter la capacité d'absorption du rayonnement solaire par le capteur solaire 2.

Comme illustré en figures 1 et 6, le capteur solaire 2 peut comporter au moins un, ou plusieurs, réflecteurs 5 pour orienter le rayonnement solaire F2 en direction de l'absorbeur 1, ou du récepteur 14 du capteur solaire 2 comportant les absorbeurs 1a, 1b, 1c. Autrement dit, le capteur solaire 2 est un capteur solaire à concentration. Ceci présente l'avantage de concentrer de l'énergie sur l'absorbeur 1 en vue d'augmenter la température du fluide caloporteur circulant dans ledit absorbeur 1.

Le ou les réflecteurs 5 peuvent former un champ solaire du capteur solaire 2.

Comme illustré en figure 7, les ailettes 3 peuvent être recouvertes d'une couche antireflet 15. Ceci permet d'améliorer l'absorbance de l'absorbeur sans modifier significativement le coefficient d'émission de l'absorbeur dans l'infrarouge depuis sa surface d'absorption. Une modification significative correspond à une modification de plus de 2% de la valeur du coefficient d'émission. Le cas échéant, le ou les congés ainsi que le ou les éléments en saillie peuvent être recouverts de la couche antireflet. La présence d'une telle couche antireflet permet de renforcer la sélectivité de l'absorbeur 1. Par exemple, cette couche antireflet peut être à base d'alumine ou de nitrure d'aluminium, et peut présenter une épaisseur comprise entre 1nm et 1µm.

En option, comme illustré en figure 8, la sélectivité de l'absorbeur 3 peut être renforcée en appliquant un traitement de surface comme par exemple une peinture à base de silicone et de pigments ou un dépôt d'une couche de cermet. Dans ce cas, les ailettes 3 comportent chacune une première partie 306, formant préférentiellement une continuité de matière avec le support 8, et une deuxième partie 307 adoptant la forme d'une couche formée sur la première partie 306. La couche formant la deuxième partie 307 correspond alors au traitement de surface. Ceci permet de combiner l'amélioration de l'absorbance de l'absorbeur 1 procurée par les ailettes 3 à celle d'un matériau adapté. Le traitement de surface peut aussi être mis en place entre les ailettes d'où il résulte qu'il délimite la surface d'absorption 4 de l'absorbeur 1.

Il a été évoqué un absorbeur 1 en forme de tube, dans ce cas les ailettes peuvent être courbées autour de l'axe du tube. L'absorbeur 1 peut aussi être tel que le support évoqué précédemment présente une face plane à partir de laquelle les ailettes d'étendent : elles sont alors rectilignes.

Il a été évoqué ci-dessus que pour une ailette 3 de l'absorbeur 1 (et notamment pour chaque ailette 3 de l'absorbeur 1), les dimensions de son profil peuvent changer selon la longueur de ladite ailette. Par exemple, si l'absorbeur a la forme générale d'un tube, les ailettes s'étendent selon leur longueur autour de l'axe du tube. Dans ce cas, certaines parties d'une ailette peuvent percevoir une densité de flux du rayonnement incident différente : les dimensions des ailettes peuvent donc varier pour s'adapter à cette situation. Notamment, si une ailette comporte une partie qui n'est pas soumise au rayonnement incident, les dimensions de l'ailette 3 peuvent être réduites pour limiter l'émittance de l'ailette 3 dans l'infrarouge en vue de limiter les pertes par rayonnement. De préférence, si une partie de l'absorbeur n'est pas soumise au rayonnement incident, ou est soumise à un flux du rayonnement incident de densité strictement inférieur à un certain seuil alors les ailettes ne s'étendent pas dans cette partie.

En particulier, l'absorbeur peut présenter une dimension de référence, par exemple une longueur, et les ailettes sont échelonnées selon cette dimension de référence, notamment selon le pas évoqué précédemment. Dans ce cas, il est possible d'avoir des géométries d'ailettes différentes (par exemples des profils d'ailettes à dimensions différentes) en fonction des positions des ailettes vis-à-vis de la dimension de référence. Ceci permet de s'adapter à la température du fluide caloporteur en proposant une géométrie des ailettes adaptée. En particulier, pour augmenter de manière importante la chaleur du fluide caloporteur, on va chercher à maximiser localement, par un dimensionnement adapté des ailettes, le coefficient d'absorption au détriment du coefficient d'émission. Au contraire, lorsque le fluide caloporteur est très chaud, on aura tendance à diminuer le coefficient d'émission de l'absorbeur dans l'infrarouge pour éviter les déperditions vers le milieu ambiant tout en conservant un coefficient d'absorption satisfaisant.

Tout ce qui a été décrit en relation avec l'absorbeur peut s'appliquer dans le cadre du capteur solaire et inversement.

De manière générale, l'absorbeur 1 et la centrale solaire, peuvent trouver une application industrielle dans la conversion d'énergie solaire, notamment appliquée à tout installation solaire thermique à concentration solaire pour laquelle l'absorbeur 1 doit présenter des propriétés de sélectivité, et pour laquelle une solution à bas coûts est recherchée. Préférentiellement, l'absorbeur tel que décrit peut être utilisé dans des centrales solaires de type héliostat, à réflecteurs à miroirs de Fresnel ou à réflecteurs cylindro-parabolique.

La présence d'ailettes 3 permet, de préférence, de s'affranchir d'utiliser une peinture ou un dépôt de cermet pour améliorer l'absorbance de l'absorbeur 1, ceci permet d'obtenir un absorbeur 1 dont les propriétés optiques sont stables en température, permettant ainsi d'utiliser la surface d'absorption à des température élevées, sous air ou sous vide. Par ailleurs, les ailettes 3 présentent préférentiellement une tenue mécanique suffisante qui permet utilisation et la manutention de l'absorbeur 1 sans précaution particulière.

Dans une application solaire comme celle du capteur solaire, l'angle d'incidence du rayonnement incident à l'absorbeur 1 n'est pas normal à sa surface : les ailettes 3 permettent donc avec leur profil optimisé de prendre en compte l'incidence moyenne du rayonnement incident. En particulier, le capteur solaire décrit, et notamment la géométrie décrite des ailettes 3, permettent :
- une application adaptée dans l'absorption de rayonnement solaire,
- d'augmenter l'absorbance de l'absorbeur 1 tout en limitant l'augmentation de son émittance,
- de prendre en compte des surfaces réelles c'est-à-dire comportant des rayons de courbures et d'adapter ces rayons de courbures à l'application,
- de prendre en compte une variabilité de l'angle incident du rayonnement solaire induit par exemple par le réflecteur 5 : selon le type de centrale solaire, il peut y avoir plusieurs directions de rayonnements incidents à absorber, et/ou la direction du rayonnement incident peut varier en fonction de la position du soleil, la présente invention permet pour une centrale solaire donnée de proposer une configuration des ailettes optimisée à cette centrale.

## Revendications

1. Absorbeur (1) pour capteur solaire (2), ledit absorbeur (1) étant apte à absorber un rayonnement incident (F1) audit absorbeur (1) et issu d'un rayonnement solaire (F2), l'absorbeur (1) comportant des ailettes (3) d'absorption du rayonnement incident (F1),
- chaque ailette (3) étant adjacente à au moins une autre desdites ailettes (3),
- lesdites ailettes (3) comportant chacune une extrémité (301) dont au moins une partie est destinée à être orientée vers une région de provenance du rayonnement incident (F1),
- lesdites ailettes (3) comportent chacune deux faces opposées (302, 303) convergeant l'une vers l'autre en direction de l'extrémité (301) de ladite ailette (3), l'extrémité (301) étant formée par un arrondi (304) reliant les deux faces opposées (302, 303) de ladite ailette (3),
**caractérisé en ce qu'**il comporte un élément en saillie (10) disposé entre les ailettes (3c, 3d) d'un couple d'ailettes adjacentes (3c, 3d), et **en ce que**, selon un plan de coupe longitudinal de l'absorbeur (1), l'élément en saillie (10) présente un profil ayant une hauteur strictement inférieure aux hauteurs de profils des ailettes (3c, 3d) dudit couple d'ailettes adjacentes (3c, 3d) pris dans ledit plan de coupe.

2. Absorbeur (1) selon la revendication 1, **caractérisé en ce que** les ailettes (3) présentent un comportement spéculaire.

3. Absorbeur (1) selon l'une quelconque des revendications précédentes, **caractérisé en ce que** les ailettes (3) sont formées dans un matériau tel qu'elles présentent un coefficient d'absorption dans le visible et un coefficient d'émission dans l'infrarouge depuis leur surface, ledit coefficient d'absorption étant strictement supérieur audit coefficient d'émission.

4. Absorbeur (1) selon l'une quelconque des revendications précédentes, **caractérisé en ce que** les ailettes (3) sont obtenues par déformation de matière.

5. Absorbeur (1) selon l'une quelconque des revendications précédentes, **caractérisé en ce que** les ailettes (3) sont agencées selon un pas, et **en ce que** les ailettes (3) présentent chacune un profil ayant une hauteur comprise entre 0,5 fois le pas et 2 fois le pas, ledit profil comportant un rayon de courbure compris entre 0,005 fois le pas et 0,1 fois le pas à l'extrémité (301) de ladite ailette (3).

6. Absorbeur (1) selon l'une quelconque des revendications précédentes, **caractérisé en ce qu'**il comporte :
- une surface d'absorption (4) associée aux ailettes (3), et
- une surface interne (6) délimitant au moins une partie d'un canal de circulation (7) d'un fluide caloporteur.

7. Absorbeur (1) selon l'une quelconque des revendications précédentes, **caractérisé en ce que** les ailettes (3) sont formées en un matériau inoxydable.

8. Capteur solaire (2), **caractérisé en ce qu'**il comporte au moins un absorbeur (1) selon l'une quelconque des revendications précédentes, et **en ce que** les ailettes (3) sont agencées de sorte qu'au moins une partie de l'extrémité (301) de chaque ailette (3) est orientée vers une région de provenance du rayonnement incident (F1).

9. Capteur solaire (2) selon la revendication précédente, **caractérisé en ce qu'**il comporte le fluide caloporteur circulant dans l'absorbeur (1), ledit absorbeur (1) étant soumis au rayonnement incident (F1).

10. Capteur solaire (2) selon la revendication 8 ou 9, **caractérisé en ce qu'**il comporte au moins un réflecteur (5) pour orienter le rayonnement solaire (F2) en direction de l'absorbeur (1).

11. Capteur solaire (1) selon l'une quelconque des revendications 8 à 10, **caractérisé en ce qu'**il comporte une pluralité d'absorbeurs (1) chacun apte à coopérer avec un rayonnement qui lui est incident en vue de chauffer un fluide caloporteur.

## Patentansprüche

1. Absorber (1) für einen Solarsensor (2), wobei der Absorber (1) geeignet ist, eine einfallende Strahlung (F1) zu absorbieren, die auf den Absorber (1) einfällt und aus einer Solarstrahlung (F2) stammt, wobei der Absorber (1) Rippen (3) zur Absorption der einfallenden Strahlung (F1) umfasst,
- wobei jede Rippe (3) benachbart zu mindestens einer anderen der Rippen (3) ist,
- wobei die Rippen (3) jeweils ein Ende (301) umfassen, von dem mindestens ein Teil dazu bestimmt ist, zu einer Herkunftsregion der einfallenden Strahlung (F1) ausgerichtet zu sein,
- wobei die Rippen (3) jeweils zwei entgegengesetzte Seiten (302, 303) umfassen, die in Richtung des Endes (301) der Rippe (3) zueinander konvergieren, wobei das Ende (301) durch eine Rundung (304) gebildet wird, die die beiden entgegengesetzten Seiten (302, 303) der Rippe (3) verbindet,
**dadurch gekennzeichnet, dass** er ein vorspringendes Element (10) umfasst, das zwischen den Rippen (3c, 3d) eines Paars benachbarter Rippen (3c, 3d) angeordnet ist, und dass, entlang einer Längsschnittebene des Absorbers (1), das vorspringende Element (10) ein Profil aufweist, das eine Höhe hat, die strikt kleiner als die Höhen von Profilen der Rippen (3c, 3d) des Paars benachbarter Rippen (3c, 3d) ist, erfasst in der Schnittebene.

2. Absorber (1) nach Anspruch 1, **dadurch gekennzeichnet, dass** die Rippen (3) ein spiegelndes Verhalten aufweisen.

3. Absorber (1) nach einem der vorhergehenden Ansprüche, **dadurch gekennzeichnet, dass** die Rippen (3) aus einem solchen Werkstoff gebildet sind, dass sie einen Absorptionskoeffizienten im sichtbaren Bereich und einen Emissionskoeffizienten im Infrarotbereich von ihrer Oberfläche aus aufweisen, wobei der Absorptionskoeffizient strikt größer als der Emissionskoeffizient ist.

4. Absorber (1) nach einem der vorhergehenden Ansprüche, **dadurch gekennzeichnet, dass** die Rippen (3) durch Materialverformung erhalten werden.

5. Absorber (1) nach einem der vorhergehenden Ansprüche, **dadurch gekennzeichnet, dass** die Rippen (3) gemäß einer Schrittweite angeordnet sind und dass die Rippen (3) jeweils ein Profil aufweisen, das eine Höhe zwischen dem 0,5-Fachen der Schrittweite und dem 2-Fachen der Schrittweite hat, wobei das Profil einen Krümmungsradius zwischen dem 0,005-Fachen der Schrittweite und dem 0,1-Fachen der Schrittweite an dem Ende (301) der Rippe (3) umfasst.

6. Absorber (1) nach einem der vorhergehenden Ansprüche, **dadurch gekennzeichnet, dass** er umfasst:
- eine Absorptionsfläche (4), die den Rippen (3) zugeordnet ist, und
- eine Innenfläche (6), die mindestens einen Teil eines Zirkulationskanals (7) eines Wärmeträgerfluids begrenzt.

7. Absorber (1) nach einem der vorhergehenden Ansprüche, **dadurch gekennzeichnet, dass** die Rippen (3) aus einem nichtrostenden Werkstoff gebildet sind.

8. Solarsensor (2), **dadurch gekennzeichnet, dass** er mindestens einen Absorber (1) nach einem der vorhergehenden Ansprüche umfasst und dass die Rippen (3) so angeordnet sind, dass mindestens ein Teil des Endes (301) jeder Rippe (3) zu einer Herkunftsregion der einfallenden Strahlung (F1) ausgerichtet ist.

9. Solarsensor (2) nach dem vorhergehenden Anspruch, **dadurch gekennzeichnet, dass** er das Wärmeträgerfluid umfasst, das in dem Absorber (1) zirkuliert, wobei der Absorber (1) der einfallenden Strahlung (F1) ausgesetzt ist.

10. Solarsensor (2) nach Anspruch 8 oder 9, **dadurch gekennzeichnet, dass** er mindestens einen Reflektor (5) umfasst, um die Solarstrahlung (F2) in Richtung des Absorbers (1) auszurichten.

11. Solarsensor (1) nach einem der Ansprüche 8 bis 10, **dadurch gekennzeichnet, dass** er eine Mehrzahl von Absorbern (1) umfasst, von denen jeder geeignet ist, mit einer auf ihn einfallenden Strahlung zusammenzuwirken, um ein Wärmeträgerfluid zu erhitzen.

## Claims

1. Absorber (1) for solar collector (2), said absorber (1) being able to absorb radiation (F1) incident on said absorber (1) and resulting from solar radiation (F2), the absorber (1) having fins (3) for absorbing the incident radiation (F1),
- each fin (3) being adjacent to at least one other of said fins (3),
- said fins (3) each having an end (301) of which at least a part is intended to be oriented towards a region of origin of the incident radiation (F1),
- said fins (3) each having two opposite faces (302, 303) that converge towards one another in the direction of the end (301) of said fin (3), the end (301) being formed by a rounding (304) connecting the two opposite faces (302, 303) of said fin (3),
**characterized in that** it has a protruding element (10) disposed between the fins (3c, 3d) of a pair of adjacent fins (3c, 3d), and **in that**, on a longitudinal section plane of the absorber (1), the protruding element (10) has a profile having a height strictly smaller than the heights of the profiles of the fins (3c, 3d) of said pair of adjacent fins (3c, 3d) taken in said section plane.

2. Absorber (1) according to Claim 1, **characterized in that** the fins (3) exhibit specular behaviour.

3. Absorber (1) according to either one of the preceding claims, **characterized in that** the fins (3) are formed from a material such that they have a coefficient of absorption in the visible and a coefficient of emission in the infrared from their surface, said coefficient of absorption being strictly greater than said coefficient of emission.

4. Absorber (1) according to any one of the preceding claims, **characterized in that** the fins (3) are obtained by deformation of material.

5. Absorber (1) according to any one of the preceding claims, **characterized in that** the fins (3) are arranged with a pitch, and **in that** the fins (3) each have a profile having a height of between 0.5 times the pitch and 2 times the pitch, said profile having a radius of curvature of between 0.005 times the pitch and 0.1 times the pitch at the end (301) of said fin (3).

6. Absorber (1) according to any one of the preceding claims, **characterized in that** it has:
- an absorption surface (4) associated with the fins (3), and
- an internal surface (6) delimiting at least a part of a circulation channel (7) for a heat-transfer fluid.

7. Absorber (1) according to any one of the preceding claims, **characterized in that** the fins (3) are formed from a stainless material.

8. Solar collector (2), **characterized in that** it has at least one absorber (1) according to any one of the preceding claims, and **in that** the fins (3) are arranged such that at least a part of the end (301) of each fin (3) is oriented towards a region of origin of the incident radiation (F1).

9. Solar collector (2) according to the preceding claim, **characterized in that** it has the heat-transfer fluid circulating in the absorber (1), said absorber (1) being subjected to the incident radiation (F1).

10. Solar collector (2) according to Claim 8 or 9, **characterized in that** it has at least one reflector (5) for orienting the solar radiation (F2) in the direction of the absorber (1).

11. Solar collector (1) according to any one of Claims 8 to 10, **characterized in that** it has a plurality of absorbers (1) that are each able to cooperate with radiation that is incident thereon with a view to heating a heat-transfer fluid.
